# EUROPEAN PATENT SPECIFICATION

(11) **EP 4 174 607 B1**
(45) Date of publication and mention of the grant of the patent: **08.10.2025**
(21) Application number: 22192180.2
(22) Date of filing: 25.08.2022
(51) Int. Cl.: G05D 1/00

(54) **VEHICLE CONTROL DEVICE, SYSTEM, METHOD, AND NON-TRANSITORY STORAGE MEDIUM**
FAHRZEUGSTEUERUNGSVORRICHTUNG, -SYSTEM, -VERFAHREN UND NICHTFLÜCHTIGES SPEICHERMEDIUM
DISPOSITIF DE COMMANDE DE VÉHICULE, SYSTÈME, PROCÉDÉ ET SUPPORT D'ENREGISTREMENT NON TRANSITOIRE

(30) Priority: 26.10.2021 JP 2021174555
(43) Date of publication of application: 03.05.2023
(73) Proprietor: TOYOTA JIDOSHA KABUSHIKI KAISHA, Aichi-Ken 471-8571 (JP)
(72) Inventor: YOSHIDA, Kaoru, Toyota-Shi, Aichi-Ken, 471-8571 (JP); OKUDA, Masataka, Toyota-Shi, Aichi-Ken, 471-8571 (JP); KURIYAMA, Kanade, Toyota-Shi, Aichi-Ken, 471-8571 (JP); KAKUTANI, Masatoshi, Toyota-Shi, Aichi-Ken, 471-8571 (JP); MAKI, Hiroki, Toyota-Shi, Aichi-Ken, 471-8571 (JP); WATANABE, Kosuke, Toyota-Shi, Aichi-Ken, 471-8571 (JP)
(74) Representative: Cabinet Beau de Loménie

(56) References cited:
- EP-A2- 3 339 999
- WO-A1-2018/106752
- US-A1- 2021 072 744

## Description

### 1. Field of the Invention

The present disclosure relates to a vehicle control device, a system, a method, and a non-transitory storage medium.

### 2. Description of Related Art

Japanese Unexamined Patent Application Publication No. 2019-505059 (JP 2019-505059 A) discloses an autonomous vehicle service platform communicatively connected to a plurality of autonomous vehicles that autonomously drives on a road network via a network. The autonomous vehicle service platform remotely controls the autonomous vehicles and provides users with various services using the autonomous vehicles.

In addition, Japanese Unexamined Patent Application Publication No. 2020-013557 (JP 2020-013557 A) discloses a system for evaluating risks associated with vehicle traveling by using a digital twin formed on a cloud based on data collected from a plurality of vehicles via a network.
Besides, US 2021/072744 discloses a vehicle remote instruction system configured to send a delay instruction to set a reflection time closer to a recommended time when a predicted time is earlier than the recommended time, and send a preparation instruction to cause the autonomous driving vehicle to behave in response to the type of the remote instruction at an earlier time when the predicted time is later than the recommended time.

### SUMMARY OF THE INVENTION

In a system in which a vehicle and a control device provided on the cloud are connected via a network, a communication delay occurs between the vehicle and the cloud. Therefore, when the vehicle is controlled by the control device, it is desired to reduce the influence of the communication delay that occurs between the vehicle and the cloud.

The disclosure provides a vehicle control device capable of reducing the influence of a communication delay that occurs between a vehicle and a cloud when the vehicle is remotely controlled by using a control device provided on the cloud, and the like.

A first aspect of the disclosure relates to a vehicle control device as defined in claim 1. The vehicle control device includes one or more processors. The processors are configured to perform communication with a plurality of vehicles, transmit and receive data to and from the vehicles, acquire a communication delay time between the vehicle control device and a controlled vehicle that is a target of remote control among the vehicles, based on the transmitted and received data, and generate a control signal to be transmitted to the controlled vehicle for remote control based on the acquired communication delay time.

A second aspect of the disclosure relates to a system as defined in claim 8. The system includes a plurality of vehicles and a vehicle control device. The vehicle control device includes one or more processors. The processors are configured to perform communication with the vehicles, transmit and receive data to and from the vehicles, acquire a communication delay time between the vehicle control device and a controlled vehicle that is a target of remote control among the vehicles, based on the transmitted and received data, and generate a control signal to be transmitted to the controlled vehicle for the remote control based on the acquired communication delay time.

A third aspect of the disclosure relates to a method as defined in claim 9, that is executable by a computer of a vehicle control device including one or more processors and one or more memories and configured to perform communication with a plurality of vehicles. The method includes transmitting and receiving data to and from the vehicles, acquiring a communication delay time between the vehicle control device and a controlled vehicle that is a target of remote control among the vehicles, based on the transmitted and received data, and generating a control signal to be transmitted to the controlled vehicle for the remote control based on the communication delay time.

A fourth aspect of the disclosure relates to a non-transitory storage medium as defined in claim 10, storing instructions that are executable by a computer of a vehicle control device including one or more processors and one or more memories and configured to perform communication with a plurality of vehicles and that cause the computer to perform the following functions. The functions include transmitting and receiving data to and from the vehicles, acquiring a communication delay time between the vehicle control device and a controlled vehicle that is a target of remote control among the vehicles based on the transmitted and received data, and generating a control signal to be transmitted to the controlled vehicle for the remote control based on the communication delay time.

According to the above aspects, when the vehicle is remotely controlled by using the control device provided on the cloud, the influence of the communication delay that occurs between the vehicle and the cloud can be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of a network system including a vehicle control device according to an embodiment of the disclosure;
FIG. 2 is a block diagram showing a schematic configuration of the vehicle control device;
FIG. 3 is a functional block diagram of the vehicle control device;
FIG. 4 is a flowchart of a data correction control process executed by the vehicle control device;
FIG. 5 is a flowchart of a communication delay time prediction process executed by the vehicle control device;
FIG. 6 is a flowchart of a control signal generation process executed by the vehicle control device;
FIG. 7A is a diagram illustrating control signal transmission executed by a device in the related art;
FIG. 7B is a diagram illustrating an example of time-synchronized control signal transmission executed by the vehicle control device;
FIG. 7C is a diagram illustrating another example of the time-synchronized control signal transmission executed by the vehicle control device; and
FIG. 8 is a functional block diagram of the vehicle control device using an external device.

### DETAILED DESCRIPTION OF EMBODIMENTS

When a vehicle control device of the disclosure remotely controls a vehicle, which is a control target, the vehicle control device predicts a communication delay time at a future vehicle position where a remote control is performed by using a database that stores past statistical communication quality data corresponding to a road map, and generates and transmits a control signal suitable for a vehicle that ensures time synchronization between a virtual space formed on a cloud and a real space, based on the predicted communication delay time and a digital twin. In this way, the influence of the communication delay that occur between the vehicle and the cloud is reduced.

Hereinafter, an embodiment of the disclosure will be described in detail with reference to the drawings.

### Embodiment

### Configuration

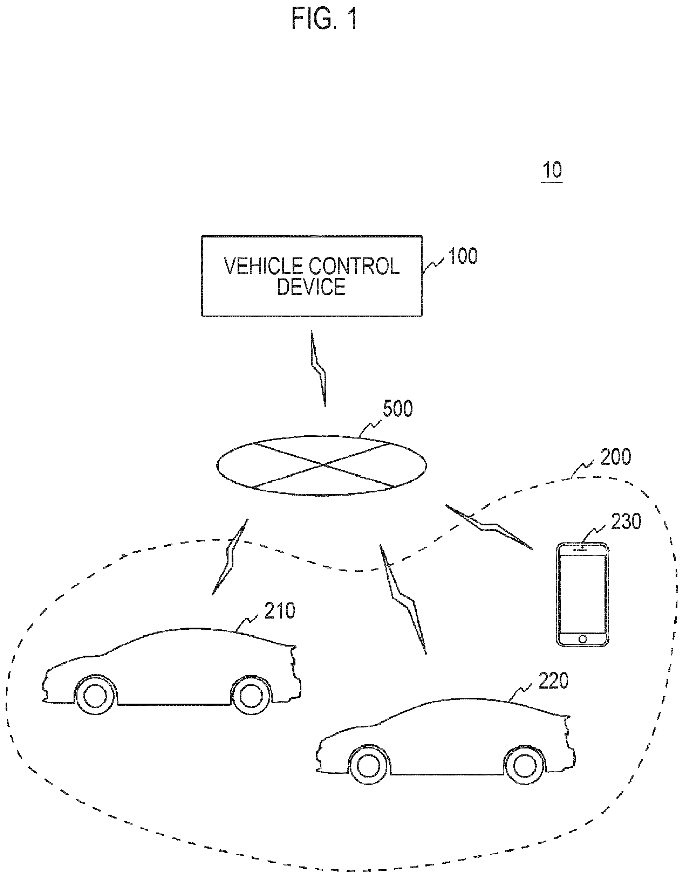

FIG. 1 is a block diagram showing an overall configuration example of a digital twin system 10 including a vehicle control device 100 according to an embodiment of the disclosure. The digital twin system 10 illustrated in FIG. 1 includes the vehicle control device 100 and a communication device group 200 including a plurality of vehicles, and is a vehicle system that can remotely control at least one of the vehicles included in the communication device group 200 by the vehicle control device 100. The vehicle control device 100 and the communication device group 200 are communicatively connected to each other via a communication line 500 such as the Internet.

### (1) Communication Device Group

The communication device group 200 constituting the digital twin system 10 includes a control target vehicle 210, an information providing vehicle 220, and an information terminal 230. The control target vehicle 210 is a controlled vehicle that is subject to remote control which the vehicle control device 100 executes utilizing a large amount of data collected by the vehicle control device 100. The control target vehicle 210 provides at least data regarding a vehicle state, which will be described later, to the vehicle control device 100. The information providing vehicle 220 is a vehicle that is not subject to remote control and merely provides data related to communication quality, which will be described later, to the vehicle control device 100. The information terminal 230 is, for example, a smartphone or a tablet terminal, and is a communication device that provides data related to communication quality to the vehicle control device 100, similar to the information providing vehicle 220.

As information included in data related to the communication quality (or radio wave quality) provided by the information providing vehicle 220 or the information terminal 230 to the vehicle control device 100, "time and position information" including the time (time stamp) when the information is measured, detected, or acquired, and the latitude and longitude of a global positioning system (GPS) that specifies the position of the vehicle, "communication information" including the name of a service provider that provides the communication line 500, a cell identification (ID) that is information that can specify a wireless base station, or the like, and "communication quality information" including execution speed (vertical average and peak throughput), communication delay time, packet loss, radio field strength RSSI, or the like may be exemplified. The time and position information can be acquired by using the clock function, the GPS reception function, or the like, implemented in the information providing vehicle 220 and the information terminal 230. The communication information can be acquired by using a communication function implemented in the information providing vehicle 220 or the information terminal 230. As an example, the communication quality information can be calculated from a result obtained by executing an information measurement tool or information measurement application software, or the like, implemented or installed in advance in the information providing vehicle 220 and the information terminal 230, and transmitting a predetermined test signal to the vehicle control device 100 (measurement server, or the like) at a predetermined cycle. In addition to the above method, highly precise communication quality information can be provided to the control target vehicle 210 for reducing the processing load based on a Ping value by basic software to measure communication reachability and network round-trip time, a response speed obtained by transmitting and receiving data via the communication line 500 using actual control signals, or the like.

As information included in the data regarding the vehicle state provided by the control target vehicle 210 to the vehicle control device 100, in addition to the time and position information described above, "trajectory information" including at least the vehicle speed (time series history) and the vehicle orientation (current state), which are information on the traveling trajectory of the vehicle, can be exemplified. The trajectory information may further include navigation (setting route) information, direction indicator operation information (current state), accelerator operation amount and braking amount information (time series history), acceleration and deceleration information (time series history), shift range (D/B/R) information (current state), steering angle information (time series history), traveling lane information (current state), information on traffic lights in the oncoming lane (current state), road information including traffic congestion information (current state), or the like. The trajectory information can be acquired via an electronic control unit (ECU) that controls a sensor device or the like mounted on the control target vehicle 210.

When prediction of the communication delay time, which will be described later, in the vehicle control device 100 is possible just by data related to the communication quality provided by the information providing vehicle 220 or the information terminal 230, the control target vehicle 210 does not have to provide data related to the communication quality to is the vehicle control device 100. Further, since the information providing vehicle 220 and the information terminal 230 are communication devices that participate in the system for the purpose of making communication delay time prediction with high precision and high efficiency, the information providing vehicle 220 and the information terminal 230 do not have to be indispensable for the digital twin system 10. However, in order to predict the communication delay time with high precision and high efficiency, it is considered that data related to communication quality is provided from a large number of control target vehicles 210, information providing vehicles 220, and information terminals 230.

### (2) Vehicle Control Device

The vehicle control device 100 is configured to communicate with communication devices (not shown) mounted on the control target vehicle 210 and the information providing vehicle 220, and the information terminal 230 via the communication line 500. Then, the vehicle control device 100 may suitably execute the remote control of the control target vehicle 210 by receiving (collecting) data on communication quality and data on the vehicle state from the control target vehicle 210 and the information providing vehicle 220, and the information terminal 230, or transmitting a predetermined control signal to the control target vehicle 210. The vehicle control device 100 is provided, for example, on the cloud (for example, a cloud server).

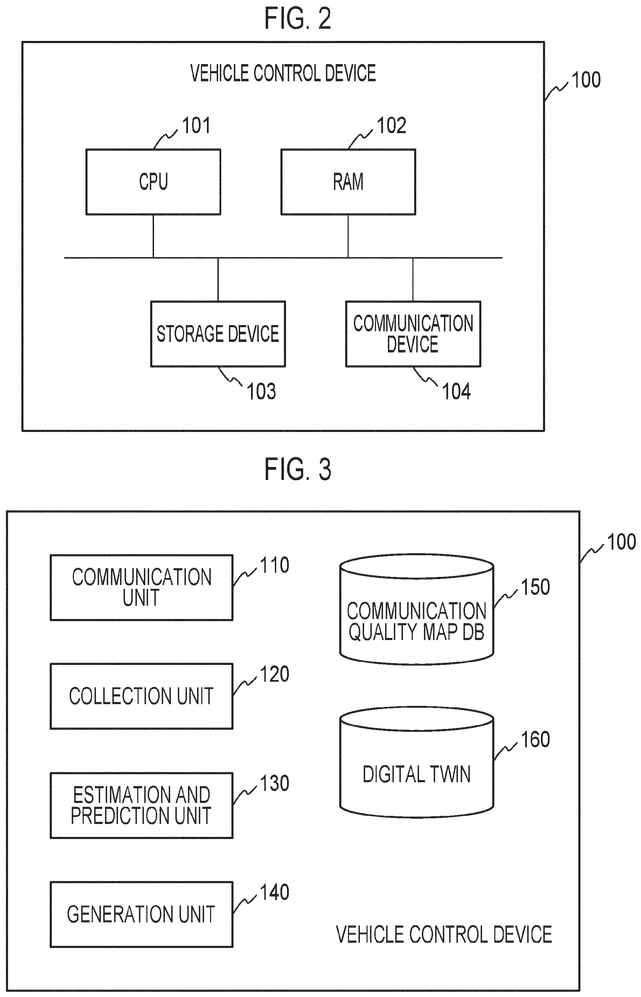

FIG. 2 is a block diagram showing a schematic configuration of the vehicle control device 100 in FIG. 1. As shown in FIG. 2, the vehicle control device 100 includes a central processing unit (CPU) 101, a random access memory (RAM) 102, a storage device 103, and a communication device 104. The number of each of the CPU 101, the RAM 102, the storage device 103, and the communication device 104 is not limited to one, and may be plural. The storage device 103 is a device provided with a readable and writable storage medium such as a hard disk drive (HDD) or a solid state drive (SSD), and stores a program for measuring communication quality, collected data related to communication quality, data for generating a digital twin 160 (described later), a program for predicting communication delay, and the like. In the vehicle control device 100, the CPU 101 executes a program read from the storage device 103 using the RAM 102 as a work area to execute a predetermined process related to the communication delay time prediction. The communication device 104 is a device for performing communication with the control target vehicle 210 and the information providing vehicle 220, and the information terminal 230 via the communication line 500.

FIG. 3 is a functional block diagram of the vehicle control device 100 shown in FIG. 2. The vehicle control device 100 shown in FIG. 3 includes a communication unit 110, a collection unit 120, an estimation and prediction unit 130, a generation unit 140, a communication quality map database (DB) 150, and the digital twin 160. The communication quality map database 150 and the digital twin 160 are implemented by the storage device 103 shown in FIG. 2. The communication unit 110, the collection unit 120, the estimation and prediction unit 130, and the generation unit 140 are implemented by the CPU 101 shown in FIG. 2 executing a program stored in the storage device 103 using the RAM 102.

The communication unit 110 performs communication with the control target vehicle 210 and the information providing vehicle 220, and the information terminal 230 to receive predetermined data (data on the vehicle state, data on communication quality, or the like), transmit and receive predetermined test signals (signals for checking the communication quality, or the like), transmit predetermined control signals (signals for remote control, or the like), and so on.

The collection unit 120 collects the data on the vehicle state and the data on communication quality provided from the control target vehicle 210 and the information providing vehicle 220, and the information terminal 230 from time to time via the communication unit 110. The collection unit 120 utilizes the data on the vehicle state for the generation of the digital twin 160 and utilizes the data on the communication quality for the formation of the communication quality map database 150.

The estimation and prediction unit 130 estimates a future position (position in the future) in which the control target vehicle 210 will travel next after a predetermined time by using the data on the vehicle state provided from the control target vehicle 210 and the information providing vehicle 220, and the information terminal 230, and data stored in the digital twin 160. More specifically, the estimation and prediction unit 130 estimates the future position of the control target vehicle 210 based on the traveling information (vehicle speed, traveling direction, navigation setting route, or the like) received from the control target vehicle 210 via the communication unit 110. The estimated future position of the control target vehicle 210 is used to generate the digital twin 160.

Further, the estimation and prediction unit 130 predicts a communication delay time (or communication delay amount) at the future position where the control target vehicle 210 is estimated to travel next by using the data related to communication quality stored in the communication quality map database 150. More specifically, the estimation and prediction unit 130 predicts the communication delay time at the future position of the control target vehicle 210 from the communication quality (execution speed, communication delay time, packet loss, radio field strength RSSI, or the like) obtained from the communication quality map database 150 based on course information (measurement time, GPS latitude and longitude, communication line service provider name, or the like) provided from the control target vehicle 210 via the communication unit 110. The execution speed includes a vertical average or peak throughput, which is the amount of information that can be received per unit time needed to calculate the time taken to complete the reception of information. The packet loss or radio field strength RSSI indicating the possibility that information does not reach is used when the retransmission time of the information is considered.

In this way, the collection unit 120 and the estimation and prediction unit 130 can function as an acquisition unit capable of estimating the future position in which the control target vehicle 210 travels and acquiring the communication delay time that occurs between the control target vehicle 210 and the vehicle control device 100 at the estimated future position.

The generation unit 140 generates a control signal for remote control of the vehicle to be transmitted to the control target vehicle 210 based on the communication delay time at the future position of the control target vehicle 210 predicted by the estimation and prediction unit 130. A method for generating a control signal based on the communication delay time will be described later.

The communication quality map database 150 is a storage unit that stores a plurality of pieces of data related to communication quality provided from the control target vehicle 210 and the information providing vehicle 220, and the information terminal 230 via the communication unit 110. The communication quality map database 150 statistically stores past communication quality data needed to predict the communication delay time at the future position where the vehicle is estimated to travel in the estimation and prediction unit 130, in a map format where the past communication quality data corresponds to map information for the road. Examples of information included in the data related to communication quality stored in the communication quality map database 150 include the data measurement time, the GPS latitude and longitude, the communication line service provider name, the wireless base station cell ID, the execution speed (vertical average or peak throughput), the communication delay time, the packet loss, and the radio field strength RSSI.

The digital twin 160 is a storage function unit for reproducing a virtual world time-synchronized with the real world on a cloud computer by updating and storing data on the current and past vehicle states (vehicle position, traveling time, or the like) collected for the control target vehicle 210 in real time. Further, the digital twin 160 can generate future prediction data regarding the control target vehicle 210 from current and past data and information, based on a request. Examples of information included in the data stored in the digital twin 160 include vehicle information (VIN, or the like), information on traffic of other vehicles (including bicycles, pedestrians, or the like), map information, time information, position information (GPS latitude and longitude), and trajectory information (vehicle speed, or the like) that is a traveling trajectory.

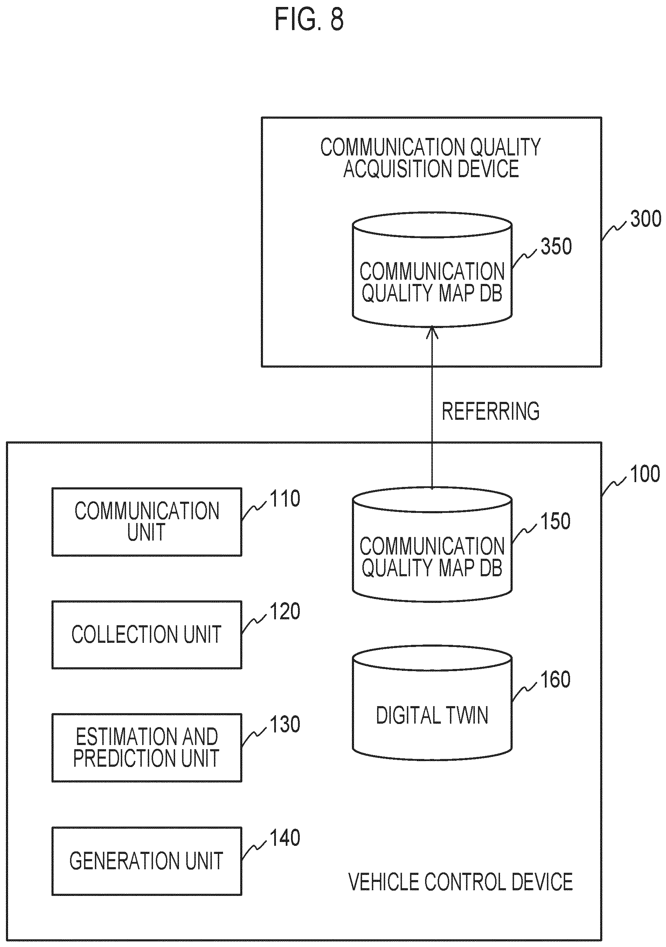

As shown in FIG. 8, the system may have a configuration in which a device other than the vehicle control device 100, for example, an external device 300, has a communication quality map database (DB) 350 having communication quality information equivalent to that of the communication quality map database 150. For the above-mentioned system configuration, the vehicle control device 100 may acquire (implement a function as) the communication quality map database 150 by referring to the communication quality map database 350 owned by the external device 300, without receiving the data related to communication quality directly from the information providing vehicle 220 and information terminal 230. Examples of the external device 300 include a telecommunications carrier and an information providing service company.

### Control

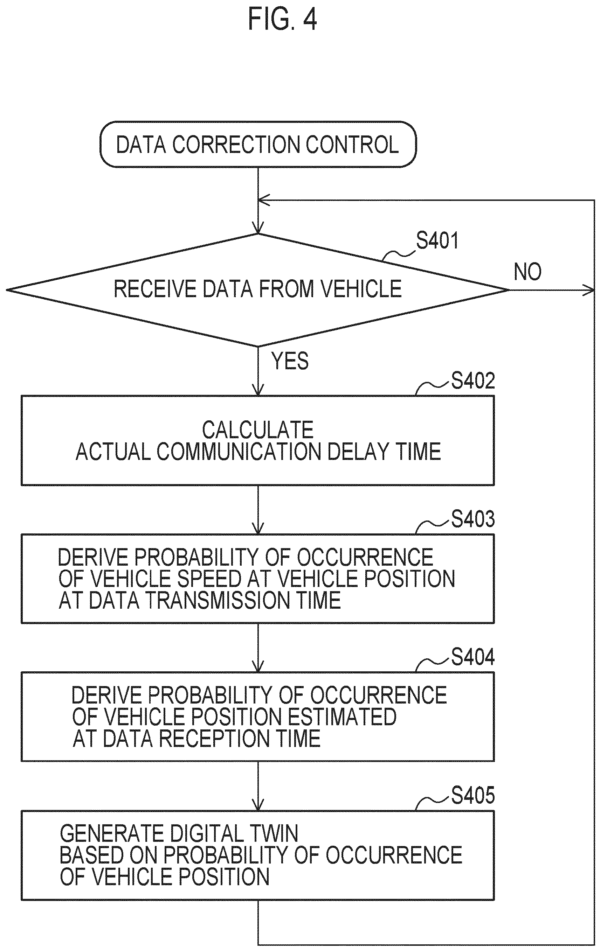

Next, processes executed by the vehicle control device 100 according to the present embodiment will be described with reference to FIGS. 4 to 6. The processes executed by the vehicle control device 100 include data correction control, communication delay time prediction, and control signal generation.

### (1) Data Correction Control

FIG. 4 is a flowchart illustrating a processing procedure of data correction control executed by the vehicle control device 100. The data correction control illustrated in FIG. 4 is a process for correcting data of the digital twin 160, and is executed every time data regarding the vehicle state is received from the control target vehicle 210.

### Step S401

The vehicle control device 100 determines whether or not data on the vehicle state has been received from the control target vehicle 210. The data on the vehicle state, which has been received from the control target vehicle 210, includes information on the position of the vehicle, time information (time stamp), and information on the traveling trajectory of the vehicle (trajectory information) at the time of data transmission (or data creation). The trajectory information includes at least the speed of the vehicle and the orientation of the vehicle. The trajectory information may also include navigation information, information from the direction indicator, accelerator operation amount and braking amount information, acceleration and deceleration information, shift range (D/B/R) information, steering angle information, road information, traffic light information for traveling and oncoming lanes, traffic congestion information, and the like.

In step S401, when data on the vehicle state is received from the control target vehicle 210 (yes in S401), the process proceeds to step S402.

### Step S402

The vehicle control device 100 calculates the delay time (actual communication delay time) actually occurring in the communication between the control target vehicle 210 and the vehicle control device 100. This actual communication delay time may be calculated by the difference between the time information (time stamp) included in the data on the vehicle state received from the control target vehicle 210 and the time when the vehicle control device 100 receives the data.

When the actual communication delay time is calculated in step S402, the process proceeds to step S403.

### Step S403

The vehicle control device 100 derives a probability of occurrence of a vehicle speed at a vehicle position of the control target vehicle 210 at the time when the control target vehicle 210 transmits the data on the vehicle state (or the time when the data is created). The probability of occurrence of the vehicle speed at the vehicle position can be derived based on the road information, traffic congestion information, past vehicle speed information, or the like, included in the data on the vehicle state received from the control target vehicle 210 or possessed by the digital twin 160. The probability of occurrence of the vehicle speed at the vehicle position is stored in a database in, for example, a map format.

In step S403, when the probability of occurrence of the vehicle speed at the vehicle position of the control target vehicle 210 at the data transmission time is derived, the process proceeds to step S404.

### Step S404

The vehicle control device 100 derives the probability of occurrence of the position of the control target vehicle 210, which is estimated at the time when the vehicle control device 100 receives the data on the vehicle state. More specifically, the vehicle control device 100 derives the probability of occurrence of the vehicle position, which is estimated as a position where the control target vehicle 210 is moving at the time when the vehicle control device 100 receives the data transmitted from the control target vehicle 210 after the actual communication delay time has elapsed, based on the actual communication delay time that occurs between the vehicle control device 100 and the control target vehicle 210, the probability of occurrence of the vehicle speed at the vehicle position of the control target vehicle 210 at the data transmission time, and the trajectory information included in the data on the vehicle state received from the control target vehicle 210. The probability of occurrence of the vehicle position can be derived, for example, as follows.
a: When the traveling speed of the vehicle is fast (and there is no tendency to decelerate)
   In this case, it is unlikely that the vehicle turns right or left or moves backward and the vehicle can be expected to go straight, and thus, a probability of occurrence of the forward position of the vehicle is derived as a high value.
b: When the direction indicator in the vehicle is operating in a left turn state
   In this case, the vehicle can be expected to turn left, and thus, the probability of occurrence of the leftward position of the vehicle is derived as a high value.
c: When the vehicle is traveling (while decelerating) in the right turn lane of a multi-lane road
   In this case, the vehicle can be expected to turn right, and thus, the probability of occurrence of the rightward position of the vehicle is derived as a high value.
d: When the shift range of the vehicle is reverse (R)

In this case, the vehicle can be expected to move backward, and thus the probability of occurrence of the rearward position of the vehicle is derived as a high value.

The vehicle control device 100 may derive the probability of occurrence of the vehicle position of the control target vehicle 210 every certain time (for example, one second) from the time when the vehicle control device 100 receives the current data until the next time new data is received from the control target vehicle 210. The certain time is set to an optimum value depending on the planned use of the control signal, the demand for precision for the vehicle position, and the like.

In step S404, when the probability of occurrence of the vehicle position of the control target vehicle 210 estimated at a data reception time is derived, the process proceeds to step S405.

### Step S405

The vehicle control device 100 generates (updates) the digital twin 160 based on the derived probability of occurrence of the vehicle position of the control target vehicle 210. In this way, it is possible to obtain the digital twin 160 in which the data communication delay and the transmission cycle are corrected.

As in the above example, when the vehicle control device 100 derives the probability of occurrence of the vehicle position of the control target vehicle 210 every certain time (for example, one second) from the time when the data on the vehicle state is received, the digital twin 160 is generated every time corresponding to the deriving of the probability of occurrence in synchronization with the current time.

When the digital twin 160 is generated in step S405, the process proceeds to step S401, and the data correction control is repeated.

### (2) Communication Delay Time Prediction

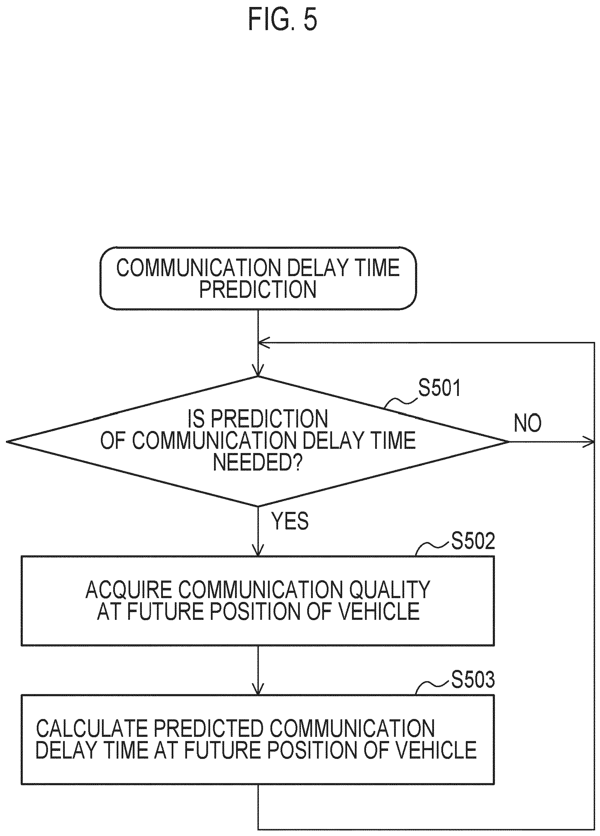

FIG. 5 is a flowchart illustrating a processing procedure for predicting the communication delay time executed by the vehicle control device 100. The communication delay time prediction illustrated in FIG. 5 is a process for predicting the communication delay time at a future position of the control target vehicle 210, and is executed at a predetermined timing at which the communication delay time is needed to be predicted.

### Step S501

The vehicle control device 100 determines whether or not the communication delay time is needed to be predicted. The determination is made, for example, when there is an explicit request for remote control from the control target vehicle 210, or when a response to a test signal for confirming communication quality is received from the control target vehicle 210.

When the communication delay time is needed to be predicted in step S501 (Yes in S501), the process proceeds to step S502.

### Step S502

The vehicle control device 100 acquires the communication quality at the future position of the control target vehicle 210. More specifically, the vehicle control device 100 acquires (extracts) the most promising communication quality information on the future position of the control target vehicle 210 from the communication quality map database 150 based on course information (measurement time, GPS latitude and longitude, communication line service provider name, or the like) provided by the control target vehicle 210. The determination as to whether or not the communication quality information is most promising can be made based on conditions such as whether the information is strict information, high-probability information, latest actual performance information, and so on.

In step S502, when the communication quality at the future position of the control target vehicle 210 is acquired, the process proceeds to step S503.

### Step S503

The vehicle control device 100 calculates a delay time (predicted communication delay time) predicted to occur in communication at the future position of the control target vehicle 210 based on the communication quality information acquired in step S502. As an example, when the communication quality is good, a relatively short time is calculated as the predicted communication delay time, and when the communication quality is poor, a relatively long time is calculated as the predicted communication delay time.

When the predicted communication delay time at the future position of the control target vehicle 210 is calculated in step S503, the process proceeds to step S501, and the communication delay time prediction is repeated.

### (3) Control Signal Generation

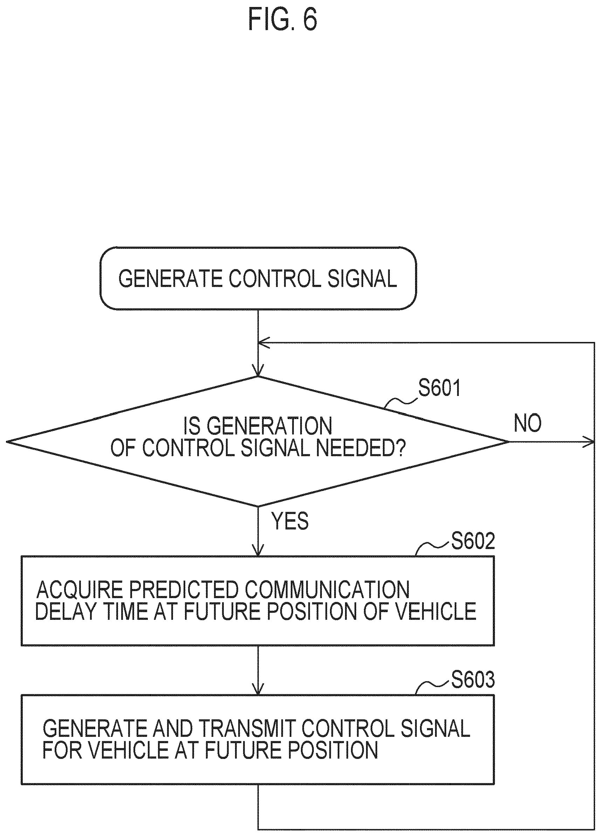

FIG. 6 is a flowchart illustrating a processing procedure for generating a control signal executed by the vehicle control device 100. A control signal generation illustrated in FIG. 6 is a process for generating a control signal related to remote control at a future position of the control target vehicle 210, and is executed at a predetermined timing when the control signal is needed to be generated.

### Step S601

The vehicle control device 100 determines whether or not a control signal for the control target vehicle 210 is needed to be generated. The determination is made, for example, when there is an explicit request for remote control from the control target vehicle 210, or when the vehicle control device 100 detects a situation in which remote control of the control target vehicle 210 is needed.

When the control signal is needed to be generated in step S601 (Yes in S601), the process proceeds to step S602.

### Step S602

The vehicle control device 100 acquires a predicted communication delay time that occurs in communication at the future position of the control target vehicle 210. The predicted communication delay time is a value calculated in the operation of step S503 in the above-mentioned communication delay time prediction.

In step S602, when the predicted communication delay time generated in the communication at the future position of the control target vehicle 210 is acquired, the process proceeds to step S603.

### Step S603

The vehicle control device 100 generates and transmits a control signal for the control target vehicle 210 at the future position, in other words, a control signal according to content of control synchronized with a time when the control signal is expected to be received by the control target vehicle 210 at the future position. More specifically, the control signal needed to remotely control the control target vehicle 210 that has traveled to the future position in the real time in a real space is generated with the synchronized time in a virtual space. Then, the generated control signal is transmitted to the control target vehicle 210 at a timing when the time control in the virtual space and the time control in the real space are synchronized, based on the predicted communication delay time acquired in step S602 above.

For example, a situation is considered in which a vehicle X traveling straight in the south direction may collide with a vehicle Y traveling straight in the east direction at an intersection 40 seconds later (time T). In the situation, as remote control of the vehicle X, there is a method of decelerating the speed of the vehicle X such that the vehicle Y passes through the intersection first. Here, it is assumed that a predicted communication delay time of the vehicle X in the area near the intersection is ten seconds. In this case, even if the operation of "passing through the intersection after ten seconds" is transmitted to the vehicle X as a control signal twenty seconds before time T, the vehicle X receives the control signal with a delay of ten seconds from the real time in the real space, and thus, actually, the operation refer to an operation of "passing through the intersection after twenty seconds (= indication of ten seconds plus delay of ten seconds)", and the collision between the vehicle X and the vehicle Y cannot be avoided.

Therefore, in the method of the present embodiment, the control signal is transmitted to the vehicle X with a time traced back (making earlier) by the predicted communication delay time such that the time when the content of control is considered in the virtual space is synchronized with the time when the vehicle receives the control signal in the real space. Specifically, in the above-mentioned situation, considering that the predicted communication delay time is ten seconds, a control signal intended to transmit the indication "passing through the intersection after twenty seconds" to the vehicle X twenty seconds before time T is not generated, and instead, a control signal intended to transmit the indication "passing through the intersection after twenty seconds" to the vehicle X thirty seconds before time T, which is a time traced back (making earlier) by ten seconds, is generated.

In step S603, when the control signal for the control target vehicle 210 at the future position is generated and transmitted, the process proceeds to step S601, and the control signal generation is repeated.

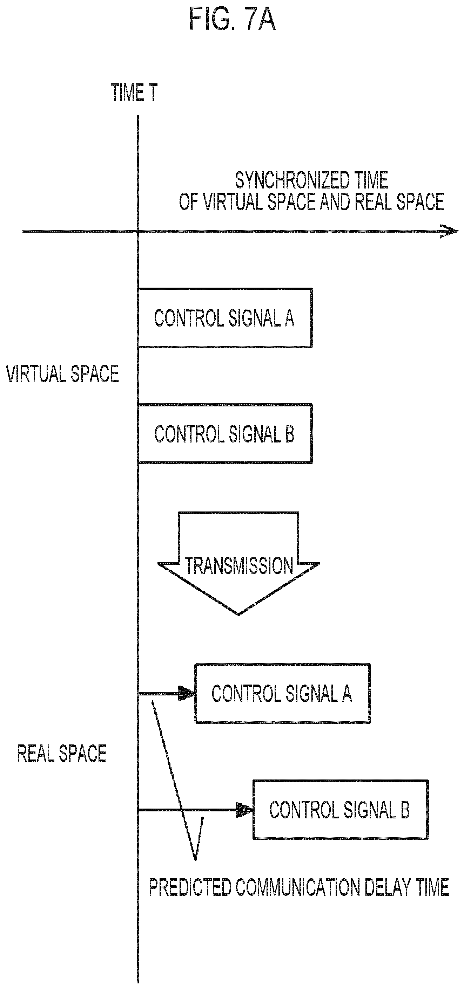

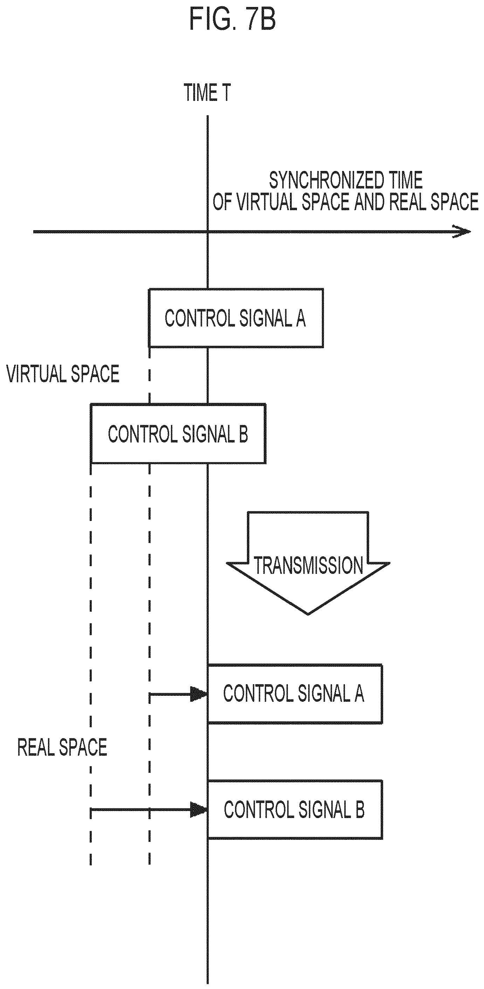

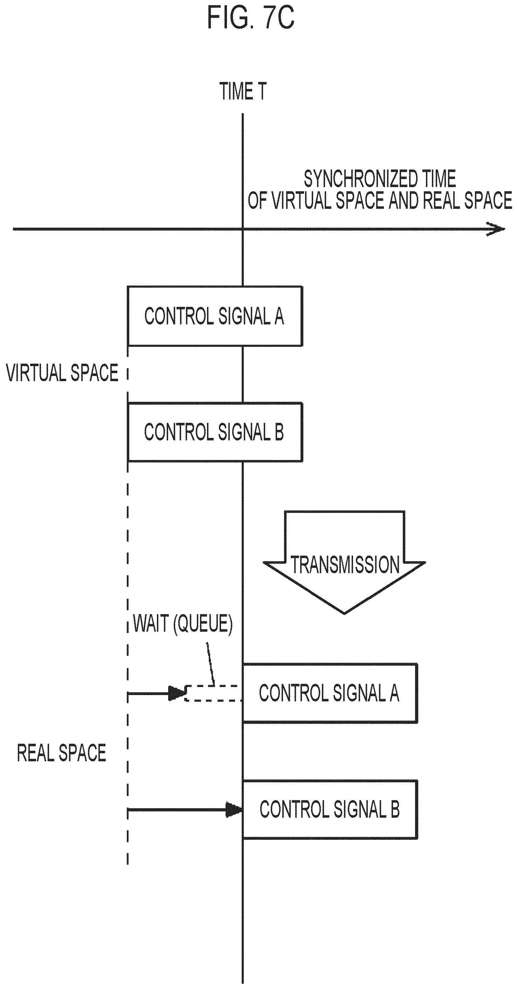

Further using FIGS. 7A, 7B, and 7C, the transmission of a time-synchronized control signal executed by the vehicle control device 100 will be described. FIG. 7A is a diagram showing a transmission state of a control signal by a device in the related art. FIGS. 7B and 7C are diagrams showing examples of the transmission state of the control signal by the vehicle control device 100 of the present embodiment, respectively.

As shown in FIG. 7A, in processing by the device in the related art that does not consider the communication delay time, the content of control determined at time T in the virtual space reach a vehicle at a time delayed by the communication delay time from time T in the real space. Therefore, for example, even if it is assumed in the virtual space that a control signal A and a control signal B are executed at the same time (control plan determination), both controls are deviated in the real space.

On the other hand, in processing by the vehicle control device 100 according to the present embodiment illustrated in FIG. 7B, the transmission timings (transmission times) of the control signal A and the control signal B are set to be earlier by respective predicted communication delay times. By the processing, the control signal A and the control signal B can be executed at the same time even in the real space as assumed in the virtual space.

Further, as in processing by the vehicle control device 100 according to the present embodiment illustrated in FIG. 7C, first, the control signal A and the control signal B may be transmitted at the same transmission timing (transmission time), and for the control signal A having a relatively short predicted communication delay time, the control execution start may be waited for by the time difference between the predicted communication delay time of the control signal A and the predicted communication delay time of the control signal B (queue processing).

### Action and Effect

As described above, with the vehicle control device 100 according to the embodiment of the present disclosure, past statistical communication quality data is stored in the storage unit (communication quality map database 150), where the past statistical communication quality data corresponds to the road map based on the data related to the communication quality transmitted and received to and from the communication device group 200 (control target vehicle 210, information providing vehicle 220, information terminal 230). With the communication quality data, the vehicle control device 100 can predict the communication delay time at the future vehicle position where the remote control is to be performed when the vehicle control device 100 instructs the control target vehicle 210 to execute remote control, and can generate and transmit a control signal suitable for performing remote control using the digital twin 160 based on the predicted communication delay time.

By the processing, the control signal that is corrected based on the predicted communication delay time, and that synchronizes the time in the virtual space formed on the cloud using the digital twin 160 with the real time in the real space (ensuring time synchronization) can instruct the control target vehicle 210 by remote control. Therefore, it is possible to reduce the influence of the communication delay that occurs between the vehicle and the cloud.

Although one embodiment of the disclosure has been described above, the disclosure can be regarded as a vehicle control device, a method that is executable by the vehicle control device including one or more processors and one or more memories, a control program for executing the method, a computer-readable non-transitory storage medium that stores the control program, and a system including the vehicle control device and vehicles.

The disclosure is useful in the case where it is desired to reduce the influence of communication delay that occurs between a vehicle and a cloud when the vehicle is remotely controlled by using the vehicle control device provided on the cloud, or the like.

## Claims

1. A vehicle control device (100) comprising one or more processors configured to
perform communication with a plurality of vehicles,
transmit and receive data to and from the vehicles,
acquire (S602) a communication delay time between the vehicle control device (100) and a controlled vehicle (210) that is a target of remote control among the vehicles, based on the transmitted and received data, and
generate (S603) a control signal to be transmitted to the controlled vehicle (210) for the remote control based on the acquired communication delay time and transmit the control signal to the controlled vehicle (210) at a timing based on the acquired communication delay time.

2. The vehicle control device (100) according to claim 1, wherein the one or more processors are configured to generate the control signal according to content of control synchronized with a time when the controlled vehicle (210) is expected to receive the control signal.

3. The vehicle control device (100) according to claim 2, wherein the one or more processors are configured to transmit the control signal to the controlled vehicle at a time that is earlier than the time when the controlled vehicle (210) is expected to receive the control signal by the communication delay time.

4. The vehicle control device (100) according to any one of claims 1 to 3, wherein the one or more processors are configured to
collect (S502) information on positions of the vehicles and information on communication quality at each of the positions of the vehicles, from the data received from the vehicles, and
predict (S503) a communication delay time between the controlled vehicle (210) and the vehicle control device (100) at a future position where the controlled vehicle is estimated to travel based on the information.

5. The vehicle control device (100) according to claim 4, wherein the one or more processors are configured to
transmit and receive data to and from one or more information terminals (230) other than the vehicles, and
collect information on positions of the one or more information terminals (230) and information on communication quality at each of the positions of the one or more information terminals (230), from the data received from the one or more information terminals (230).

6. The vehicle control device (100) according to claim 4 or 5, wherein the one or more processors are configured to
collect the information on the positions of the vehicles and trajectory information on a speed and orientation of each of the vehicles, from the data received from the vehicles, and
estimate (S404) the future position where the controlled vehicle travels based on the trajectory information.

7. The vehicle control device (100) according to any one of claims 1 to 6, wherein a digital twin (160) that is time-synchronized with a real space is formed on a virtual space by using the communication delay time.

8. A system comprising:
a plurality of vehicles; and
a vehicle control device (100) according to any one of claims 1 to 7.

9. A method that is executable by a computer of a vehicle control device (100) including one or more processors and one or more memories and configured to perform communication with a plurality of vehicles, the method comprising:
transmitting and receiving data to and from the vehicles;
acquiring a communication delay time between the vehicle control device (100) and a controlled vehicle (210) that is a target of remote control among the vehicles, based on the transmitted and received data; and
generating a control signal to be transmitted to the controlled vehicle (210) for the remote control based on the communication delay time and transmitting the control signal to the controlled vehicle (210) at a timing based on the acquired communication delay time.

10. A non-transitory storage medium storing instructions that are executable by a computer of a vehicle control device (100) including one or more processors and one or more memories and configured to perform communication with a plurality of vehicles and that cause the computer to perform functions comprising:
transmitting and receiving data to and from the vehicles;
acquiring a communication delay time between the vehicle control device (100) and a controlled vehicle (210) that is a target of remote control among the vehicles, based on the transmitted and received data; and
generating a control signal to be transmitted to the controlled vehicle (210) for the remote control based on the communication delay time and transmitting the control signal to the controlled vehicle (210) at a timing based on the acquired communication delay time.

## Patentansprüche

1. Fahrzeugsteuerungsvorrichtung (100), umfassend einen oder mehrere Prozessoren, die zu Folgendem ausgelegt sind:
Durchführen von Kommunikation mit einer Mehrzahl von Fahrzeugen,
Senden und Empfangen von Daten zu bzw. von den Fahrzeugen,
Erfassen (S602) einer Kommunikationsverzögerungszeit zwischen der Fahrzeugsteuerungsvorrichtung (100) und einem gesteuerten Fahrzeug (210), das ein Ziel von Fernsteuerung unter den Fahrzeugen ist, basierend auf den gesendeten und empfangenen Daten und
Erzeugen (S603) eines Steuersignals, das an das gesteuerte Fahrzeug (210) gesendet werden soll, für die Fernsteuerung basierend auf der erfassten Kommunikationsverzögerungszeit und Senden des Steuersignals zu einem Zeitpunkt an das gesteuerte Fahrzeug (210), der auf der erfassten Kommunikationsverzögerungszeit basiert.

2. Fahrzeugsteuerungsvorrichtung (100) nach Anspruch 1, wobei der eine oder die mehreren Prozessoren dazu ausgelegt sind, das Steuersignal gemäß dem Inhalt von Steuerung zu erzeugen, die mit einem Zeitpunkt synchronisiert ist, zu dem das gesteuerte Fahrzeug (210) voraussichtlich das Steuersignal empfängt.

3. Fahrzeugsteuerungsvorrichtung (100) nach Anspruch 2, wobei der eine oder die mehreren Prozessoren dazu ausgelegt sind, das Steuersignal zu einem Zeitpunkt an das gesteuerte Fahrzeug zu senden, der um die Kommunikationszeitverzögerung früher als der Zeitpunkt ist, zu dem das gesteuerte Fahrzeug (210) voraussichtlich das Steuersignal empfängt.

4. Fahrzeugsteuerungsvorrichtung (100) nach einem der Ansprüche 1 bis 3, wobei der eine oder die mehreren Prozessoren zu Folgendem ausgelegt sind:
Sammeln (S502) von Informationen über Positionen der Fahrzeuge und Informationen über die Kommunikationsqualität an jeder der Positionen der Fahrzeuge aus den von den Fahrzeugen empfangenen Daten und
Vorhersagen (S503) einer Kommunikationszeitverzögerung zwischen dem gesteuerten Fahrzeug (210) und der Fahrzeugsteuerungsvorrichtung (100) an einer zukünftigen Position, an der das gesteuerte Fahrzeug voraussichtlich fahren wird, basierend auf den Informationen.

5. Fahrzeugsteuerungsvorrichtung (100) nach Anspruch 4, wobei der eine oder die mehreren Prozessoren zu Folgendem ausgelegt sind:
Senden und Empfangen von Daten zu bzw. von einem oder mehreren Informationsendgeräten (230) außer den Fahrzeugen und
Sammeln von Informationen über Positionen des einen oder der mehreren Informationsendgeräte (230) und Informationen über die Kommunikationsqualität an jeder der Positionen des einen oder der mehreren Informationsendgeräte (230) aus den von dem einen oder den mehreren Informationsendgeräten (230) empfangenen Daten.

6. Fahrzeugsteuerungsvorrichtung (100) nach Anspruch 4 oder 5, wobei der eine oder die mehreren Prozessoren zu Folgendem ausgelegt sind:
Sammeln von Informationen über Positionen der Fahrzeuge und Trajektorieninformationen über eine Geschwindigkeit und Ausrichtung jedes der Fahrzeuge aus den von den Fahrzeugen empfangenen Daten und
Schätzen (S404) der zukünftigen Position, an der das gesteuerte Fahrzeug voraussichtlich fahren wird, basierend auf den Trajektorieninformationen.

7. Fahrzeugsteuerungsvorrichtung (100) nach einem der Ansprüche 1 bis 6, wobei ein digitaler Zwilling (160), der mit einem realen Raum zeitsynchronisiert ist, durch Verwenden der Kommunikationsverzögerungszeit auf einem virtuellen Raum gebildet wird.

8. System, umfassend:
eine Mehrzahl von Fahrzeugen und
eine Fahrzeugteuerungsvorrichtung (100) nach einem der Ansprüche 1 bis 7.

9. Verfahren, das von einem Computer einer Fahrzeugsteuerungsvorrichtung (100) ausgeführt werden kann, die einen oder mehrere Prozessoren und einen oder mehrere Speicher umfasst und zum Durchführen von Kommunikation mit einer Mehrzahl von Fahrzeugen ausgelegt ist, wobei das Verfahren Folgendes umfasst:
Senden und Empfangen von Daten zu bzw. von den Fahrzeugen;
Erfassen einer Kommunikationsverzögerungszeit zwischen der Fahrzeugsteuerungsvorrichtung (100) und einem gesteuerten Fahrzeug (210), das ein Ziel von Fernsteuerung unter den Fahrzeugen ist, basierend auf den gesendeten und empfangenen Daten und
Erzeugen eines Steuersignals, das an das gesteuerte Fahrzeug (210) gesendet werden soll, für die Fernsteuerung basierend auf der Kommunikationsverzögerungszeit und Senden des Steuersignals zu einem Zeitpunkt an das gesteuerte Fahrzeug (210), der auf der erfassten Kommunikationsverzögerungszeit basiert.

10. Nichtflüchtiges Speichermedium, das Anweisungen speichert, die von einem Computer einer Fahrzeugsteuerungsvorrichtung (100) ausgeführt werden können, die einen oder mehrere Prozessoren und einen oder mehrere Speicher umfasst und zum Durchführen von Kommunikation mit einer Mehrzahl von Fahrzeugen ausgelegt ist, und die den Computer zum Ausführen von Funktionen veranlassen, die Folgendes umfassen:
Senden und Empfangen von Daten zu bzw. von den Fahrzeugen;
Erfassen einer Kommunikationsverzögerungszeit zwischen der Fahrzeugsteuerungsvorrichtung (100) und einem gesteuerten Fahrzeug (210), das ein Ziel von Fernsteuerung unter den Fahrzeugen ist, basierend auf den gesendeten und empfangenen Daten und
Erzeugen eines Steuersignals, das an das gesteuerte Fahrzeug (210) gesendet werden soll, für die Fernsteuerung basierend auf der Kommunikationsverzögerungszeit und Senden des Steuersignals zu einem Zeitpunkt an das gesteuerte Fahrzeug (210), der auf der erfassten Kommunikationsverzögerungszeit basiert.

## Revendications

1. Dispositif de commande de véhicule (100) comprenant un ou plusieurs processeurs configurés pour
réaliser une communication avec une pluralité de véhicules,
transmettre et recevoir des données vers et en provenance des véhicules,
acquérir (S602) un temps de retard de communication entre le dispositif de commande de véhicule (100) et un véhicule commandé (210) qui est une cible de commande à distance parmi les véhicules, sur la base des données transmises et reçues, et
générer (S603) un signal de commande devant être transmis au véhicule commandé (210) pour la commande à distance sur la base du temps de retard de communication acquis et transmettre le signal de commande au véhicule commandé (210) à un temps basé sur le temps de retard de communication acquis.

2. Dispositif de commande de véhicule (100) selon la revendication 1, dans lequel les un ou plusieurs processeurs sont configurés pour générer le signal de commande en fonction d'un contenu de commande synchronisé avec un instant où le véhicule commandé (210) est supposé recevoir le signal de commande.

3. Dispositif de commande de véhicule (100) selon la revendication 2, dans lequel les un ou plusieurs processeurs sont configurés pour transmettre le signal de commande au véhicule commandé à un instant qui est plus tôt que le moment où le véhicule commandé (210) est supposé recevoir le signal de commande du temps de retard de communication.

4. Dispositif de commande de véhicule (100) selon l'une quelconque des revendications 1 à 3, dans lequel les un ou plusieurs processeurs sont configurés pour
collecter (S502) de l'information sur des positions des véhicules et de l'information sur la qualité de communication à chacune des positions des véhicules, à partir des données reçues des véhicules, et
prédire (S503) un temps de retard de communication entre le véhicule commandé (210) et le dispositif de commande de véhicule (100) dans une position future où le véhicule commandé est estimé se déplacer sur la base de l'information.

5. Dispositif de commande de véhicule (100) selon la revendication 4, dans lequel les un ou plusieurs processeurs sont configurés pour
transmettre et recevoir des données vers et en provenance d'un ou plusieurs terminaux d'information (230) autre que les véhicules, et
collecter de l'information sur des positions des un ou plusieurs terminaux d'information (230) et de l'information sur la qualité de communication dans chacune des positions des un ou plusieurs terminaux d'information (230), à partir des données reçues en provenance des un ou plusieurs terminaux d'information (230).

6. Dispositif de commande de véhicule (100) selon la revendication 4 ou 5, dans lequel les un ou plusieurs processeurs sont configurés pour
collecter l'information sur les positions des véhicules et de l'information de trajectoire sur une vitesse et une orientation de chacun des véhicules, à partir des données reçues des véhicules, et
estimer (S404) la position future où le véhicule commandé se déplace sur la base de l'information de trajectoire.

7. Dispositif de commande de véhicule (100) selon l'une quelconque des revendications 1 à 6, dans lequel un jumeau numérique (160) qui est synchronisé dans le temps avec un espace réel est formé sur un espace virtuel en utilisant le temps de retard de communication.

8. Système comprenant :
une pluralité de véhicules ; et
un dispositif de commande de véhicule (100) selon l'une quelconque des revendications 1 à 7.

9. Procédé qui peut être exécuté par un ordinateur d'un dispositif de commande de véhicule (100) comprenant un ou plusieurs processeurs et une ou plusieurs mémoires et configuré pour réaliser une communication avec une pluralité de véhicules, le procédé comprenant le fait de :
transmettre et recevoir des données vers et en provenance des véhicules ;
acquérir un temps de retard de communication entre le dispositif de commande de véhicule (100) et un véhicule commandé (210) qui est une cible de commande à distance parmi les véhicules, sur la base des données transmises et reçues ; et
générer un signal de commande devant être transmis au véhicule commandé (210) pour la commande à distance sur la base du temps de retard de communication et transmettre le signal de commande au véhicule commandé (210) à un instant basé sur le temps de retard de communication acquis.

10. Support de stockage non-transitoire stockant des instructions qui sont exécutables par un ordinateur d'un dispositif de commande de véhicule (100) comprenant un ou plusieurs processeurs et une ou plusieurs mémoires et configuré pour réaliser une communication avec une pluralité de véhicules et qui amènent l'ordinateur à remplir les fonctions comprenant :
la transmission et la réception de données vers et en provenance des véhicules ;
l'acquisition d'un temps de retard de communication entre le dispositif de commande de véhicule (100) et un véhicule commandé (210) qui est une cible de commande à distance parmi les véhicules, sur la base des données transmises et reçues ; et
la génération d'un signal de commande devant être transmis au véhicule commandé (210) pour la commande à distance sur la base du temps de retard de communication et la transmission du signal de commande au véhicule commandé (210) à un instant basé sur le temps de retard de communication acquis.
